# EUROPEAN PATENT APPLICATION

(11) **EP 2 925 082 A1**
(43) Date of publication of application: **30.09.2015**
(21) Application number: 12890547.8
(22) Date of filing: 20.12.2012
(51) Int. Cl.: H04W 88/08

(54) **WIRELESS COMMUNICATION METHOD, ACCESS DEVICE AND WIRELESS COMMUNICATION SYSTEM**

(71) Applicant: Huawei Technologies Co., Ltd., Longgang District Shenzhen, Guangdong 518129 (CN)
(72) Inventor: LUO, Haiyan, Shenzhen Guangdong 518129 (CN); DENG, Tianle, Shenzhen Guangdong 518129 (CN)
(74) Representative: Pfenning, Meinig & Partner GbR
(86) International application number: PCT/CN2012/086986
(87) International publication number: WO 2014/094264

(57) **Abstract**

The present invention relates to a wireless communication method, an access device, and a wireless communications system. The method includes: acquiring, by a first access device, uplink information of a second access device, where the first access device and the second access device are inter-frequency devices or inter-system devices; and receiving, by the first access device, an uplink signal of the second access device according to the uplink information, where the uplink information includes frequency information of an uplink of the second access device. Therefore, according to the present invention, an objective that the first access device receives a signal sent by user equipment of the inter-system or inter-frequency second access device, and that the first access device identifies whether the user equipment falls within a coverage area of the first access device or is near to the first access device is achieved, thereby enhancing cooperation between different access devices.

## Description

### TECHNICAL FIELD

The present invention relates to the communications field, and in particular, to a wireless communication method, an access device, and a wireless communications system.

### BACKGROUND

With rapid development of a smart terminal and a mobile application, mobile data traffic dramatically increases, and consequently, it is increasingly difficult for an existing network to meet a demand of a data traffic increase. Therefore, a mobile network operator expects to resort to another network to bear a part of network traffic that is on the existing network, so as to relieve traffic burden on the existing network.

Currently, cooperation between a 3rd Generation Partnership Project (The 3rd Generation Partnership Project, 3GPP) network and a non-3rd Generation Partnership Project network becomes a hotspot in current research, for example, cooperation between a 3GPP cellular network and a wireless local area network (Wireless Local Area Networks, WLAN). User equipment (User Equipment, UE) can operate on both the 3GPP cellular network and the WLAN network, and can access the WLAN network by using a wireless local area network access point (Wireless Local Area Networks Access Point, WLAN AP).

In an example, a Long Term Evolution (Long Term Evolution, LTE) network is used as a 3GPP cellular network, and in the prior art, LTE UE actively reads a system information block type 2 (SystemInformationBlockType2, SIB2) broadcast by an LTE evolved NodeB (Evolved Node B, eNB), to acquire uplink information, where the uplink information includes uplink frequency information or uplink bandwidth information, where an uplink is a wireless link through which the user equipment sends a signal to a base station. After acquiring an uplink frequency and an uplink bandwidth, the UE may adjust an operating parameter of a transmitter of the UE to a corresponding frequency and bandwidth, so as to subsequently access the LTE network and send data to a target access device.

However, currently, there is no related patent or document introducing a method regarding how a WLAN AP acquires uplink information of an LTE base station.

### SUMMARY

The present invention provides a wireless communication method, an access device, and a wireless communications system, so that a first access device can acquire operating uplink information of a second access device that is different from the first access device in standard, or acquire operating uplink information of an inter-frequency second access device that has the same standard as the first access device, so as to achieve an objective that the first access device receives a signal sent by user equipment of the inter-system second access device or the first access device receives a signal sent by user equipment of the inter-frequency second access device, and that the first access device identifies whether the user equipment falls within a coverage area of the first access device or is near to the first access device, thereby enhancing cooperation between different access devices.

According to a first aspect, the present invention provides a wireless communication method, where the method includes: acquiring, by a first access device, uplink information of a second access device, where the first access device and the second access device are inter-frequency devices or inter-system devices, and the uplink information includes frequency information of an uplink of the second access device; and receiving, by the first access device, an uplink signal of the second access device according to the uplink information.

In a first possible implementation manner of the first aspect, the acquiring, by a first access device, uplink information of a second access device includes: receiving, by the first access device, the uplink information of the second access device sent by the second access device.

With reference to the first possible implementation manner of the first aspect, in a second possible implementation manner, before the receiving, by the first access device, the uplink information of the second access device sent by the second access device, the method further includes: sending, by the first access device, request information for acquiring the uplink information to the second access device.

In a third possible implementation manner of the first aspect, the first access device acquires the uplink information of the second access device, the first access device receives the uplink information of the second access device sent by a network control device, and the network control device is responsible for managing coordinated work between the first access device and the second access device.

With reference to the third possible implementation manner of the first aspect, in a fourth possible implementation manner, before the receiving, by the first access device, the uplink information of the second access device sent by a network control device, the method further includes: sending, by the first access device, request information for acquiring the uplink information of the second access device to the network control device.

In a fifth possible implementation manner of the first aspect, the acquiring, by a first access device, uplink information of a second access device includes: receiving, by the first access device, the uplink information of the second access device sent by user equipment, where the user equipment is user equipment served by the first access device.

With reference to the fifth possible implementation manner of the first aspect, in a sixth possible implementation manner, before the receiving, by the first access device, the uplink information sent by user equipment, the method further includes: sending, by the first access device, request information for acquiring the uplink information of the second access device to the user equipment.

In a seventh possible implementation manner of the first aspect, the acquiring, by a first access device, uplink information of a second access device includes: receiving, by the first access device, a broadcast message at a downlink frequency of the second access device, and acquiring the uplink information of the second access device from the broadcast message.

According to a second aspect, the present invention provides an access device, where the device includes: an acquiring unit, configured to acquire uplink information of the second access device, where the access device and the second access device are inter-frequency devices or inter-system devices, and the uplink information includes frequency information of an uplink of the second access device; and a receiving unit, configured to receive an uplink signal of the second access device according to the uplink information. Optionally, the uplink information may further include bandwidth information of the second access device.

In a first possible implementation manner of the second aspect, the acquiring unit is specifically configured to receive the uplink information of the second access device sent by the second access device.

With reference to the first possible implementation manner of the second aspect, in a second possible implementation manner, the device further includes: a first sending unit, configured to send request information for acquiring the uplink information to the second access device.

In a third possible implementation manner of the second aspect, the acquiring unit is specifically configured to receive the uplink information of the second access device sent by a network control device, where the network control device is responsible for managing coordinated work between the access device and the second access device.

With reference to the third possible implementation manner of the second aspect, in a fourth possible implementation manner, the device further includes: a second sending unit, configured to send request information for acquiring the uplink information of the second access device to the network control device.

In a fifth possible implementation manner of the second aspect, the acquiring unit is specifically configured to receive the uplink information of the second access device sent by user equipment, where the user equipment is user equipment served by the access device.

With reference to the fifth possible implementation manner of the second aspect, in a sixth possible implementation manner, the device further includes: a third sending unit, configured to send request information for acquiring the uplink information of the second access device to the user equipment.

In a seventh possible implementation manner of the second aspect, the acquiring unit is specifically configured to receive a broadcast message at a downlink frequency of the second access device and acquire the uplink information of the second access device from the broadcast message.

According to a third aspect, the present invention provides a wireless communications system, where the system includes: a first access device and a second access device, the first access device is the access device according to any one of the second aspect, and the first access device and the second access device are inter-frequency devices or inter-system devices.

By applying the wireless communication method, the access device, and the wireless communications system that are disclosed by the present invention, a first access device acquires uplink information of a second access device, where the first access device and the second access device are inter-frequency devices or inter-system devices, and the uplink information includes frequency information of an uplink of the second access device; and the first access device receives an uplink signal of the second access device according to the uplink information, so as to achieve an objective that the first access device receives a signal sent by user equipment of the inter-system second access device or the first access device receives a signal sent by user equipment of the inter-frequency second access device, and that the first access device identifies whether the user equipment falls within a coverage area of the first access device or is near to the first access device, thereby enhancing cooperation between different access devices.

### BRIEF DESCRIPTION OF DRAWINGS

FIG. 1 is a flowchart of a wireless communication method according to Embodiment 1 of the present invention;
FIG. 2 is a flowchart of a wireless communication method according to Embodiment 2 of the present invention;
FIG. 3 is a flowchart of a wireless communication method according to Embodiment 3 of the present invention;
FIG. 4 is a flowchart of a wireless communication method according to Embodiment 4 of the present invention;
FIG. 5 is a flowchart of a wireless communication method according to Embodiment 5 of the present invention;
FIG. 6 is a flowchart of a wireless communication method according to Embodiment 6 of the present invention;
FIG. 7 is a flowchart of a wireless communication method according to Embodiment 7 of the present invention;
FIG. 8 is a flowchart of a wireless communication method according to Embodiment 8 of the present invention;
FIG. 9 is a schematic structural diagram of an access device according to Embodiment 9 of the present invention; and
FIG. 10 is a schematic structural diagram of an access device according to Embodiment 10 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In a wireless communication method disclosed by an embodiment of the present invention, a first access device acquires uplink information of a second access device, where the first access device and the second access device are inter-frequency devices or inter-system devices, and the uplink information includes frequency information of an uplink of the second access device; and the first access device receives an uplink signal of the second access device according to the uplink information, so as to achieve an objective that the first access device receives a signal sent by user equipment of the inter-system second access device or the first access device receives a signal sent by user equipment of the inter-frequency second access device, and that the first access device identifies whether the user equipment falls within a coverage area of the first access device or is near to the first access device, thereby enhancing cooperation between different access devices.

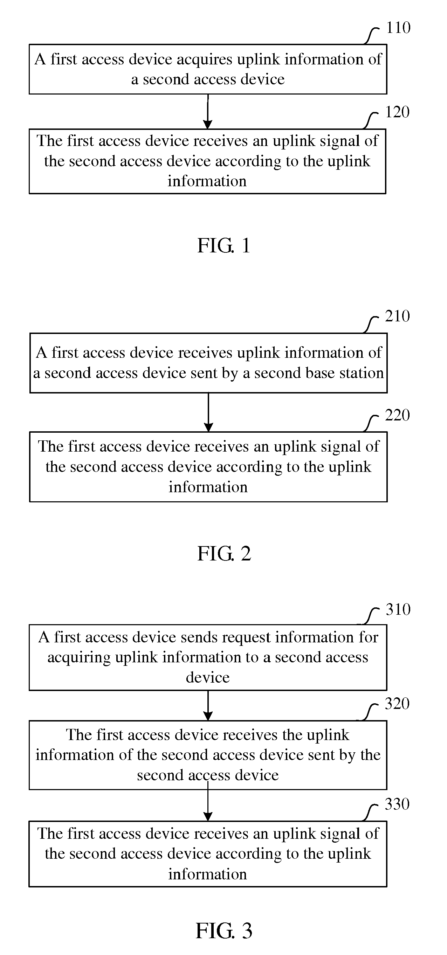

In addition, the user equipment involved in this embodiment of the present invention can operate at different frequencies or in different systems. In case of a different frequency, the first access device may allocate idle time of the user equipment for measurement, to acquire the uplink information of the second access device. In case of a different system, allocating idle time is not required, and provided that a receiver of the different system of the user equipment is turned on, broadcast information of the second access device can be received, and the uplink information of the second access device can be acquired. FIG. 1 is a flowchart of a wireless communication method according to Embodiment 1 of the present invention. As shown in the figure, this embodiment of the present invention specifically includes the following content.

110. A first access device acquires uplink information of a second access device, where the first access device and the second access device are inter-frequency devices or inter-system devices, and the uplink information includes frequency information of an uplink of the second access device.

Specifically, the first access device and the second access device may be devices of different standards, that is, inter-system devices. For example, the first access device is a wireless local area network access point (for example, a WLAN AP), and the second access device is an LTE base station (for example, an evolved NodeB eNB). In addition, the first access device and the second access device may also be inter-frequency devices, for example devices with a same standard but with different frequencies. For example, the first access device is an LTE base station and the second access device is also an LTE base station; however, the first access device and the second access device have different operating bands.

120. The first access device receives an uplink signal of the second access device according to the uplink information.

Optionally, the uplink information in the foregoing step 110 and step 120 not only includes the frequency information of the uplink of the second access device, but also includes bandwidth information of the second access device. If a system bandwidth is fixed, the uplink information includes only the frequency information of the uplink of the second access device, and does not need to include the bandwidth information of the second access device. For example, a bandwidth of a Global System for Mobile Communications (Global System for Mobile communications, GSM) carrier is 200k, a bandwidth of a Code Division Multiple Access (Code Division Multiple Access, CDMA) carrier is 1.23M, and a bandwidth of a Wideband Code Division Multiple Access (Wideband Code Division Multiple Access, WCDMA) carrier is 5M. However, if the system bandwidth is not fixed, the uplink information not only includes the frequency information of the uplink of the second access device but also includes the bandwidth information of the second access device, for example, LTE has multiple bandwidths, for example, 5M, and 10M.

Therefore, according to the wireless communication method provided by this embodiment of the present invention, a first access device acquires uplink information of a second access device, where the first access device and the second access device are inter-frequency devices or inter-system devices, and the uplink information includes frequency information of an uplink of the second access device; and the first access device receives an uplink signal of the second access device according to the uplink information, so as to achieve an objective that the first access device receives a signal sent by user equipment of the inter-system second access device or the first access device receives a signal sent by user equipment of the inter-frequency second access device, and that the first access device identifies whether the user equipment falls within a coverage area of the first access device or is near to the first access device, thereby enhancing cooperation between different access devices.

FIG. 2 is a flowchart of a wireless communication method according to Embodiment 2 of the present invention. As shown in the figure, this embodiment of the present invention specifically includes the following content.

210. A first access device receives uplink information of a second access device sent by the second access device, where the first access device and the second access device are inter-frequency devices or inter-system devices, and the uplink information includes frequency information of an uplink of the second access device or includes frequency information of an uplink of the second access device and bandwidth information of the second access device.

Specifically, the first access device directly receives the uplink information of the second access device from the second access device, where the uplink information is actively sent by the second access device to the first access device.

220. The first access device receives an uplink signal of the second access device according to the uplink information.

Therefore, according to the wireless communication method provided by this embodiment of the present invention, a first access device receives uplink information of a second access device actively sent by the second access device, and receives an uplink signal of the second access device according to the uplink information of the second access device, so as to achieve an objective that the first access device receives a signal sent by user equipment of the inter-system second access device or the first access device receives a signal sent by user equipment of the inter-frequency second access device, and that the first access device identifies whether the user equipment falls within a coverage area of the first access device or is near to the first access device, thereby enhancing cooperation between different access devices.

FIG. 3 is a flowchart of a wireless communication method according to Embodiment 3 of the present invention. As shown in the figure, this embodiment of the present invention specifically includes the following content.

310. A first access device sends request information for acquiring uplink information to a second access device, where the first access device and the second access device are inter-frequency devices or inter-system devices, and the uplink information includes frequency information of an uplink of the second access device or includes frequency information of an uplink of the second access device and bandwidth information of the second access device.

320. The first access device receives the uplink information of the second access device sent by the second access device.

Specifically, after receiving the request information that is for acquiring the uplink information of the second access device and is sent by the first access device, the second access device sends the uplink information of the second access device to the first access device.

320. The first access device receives an uplink signal of the second access device according to the uplink information.

Therefore, according to the wireless communication method provided by this embodiment of the present invention, a first access device sends request information for acquiring uplink information to a second access device, then receives the uplink information of the second access device sent by the second access device, and receives an uplink signal of the second access device according to the uplink information of the second access device, so as to achieve an objective that the first access device receives a signal sent by user equipment of the inter-system second access device or the first access device receives a signal sent by user equipment of the inter-frequency second access device, and that the first access device identifies whether the user equipment falls within a coverage area of the first access device or is near to the first access device, thereby enhancing cooperation between different access devices.

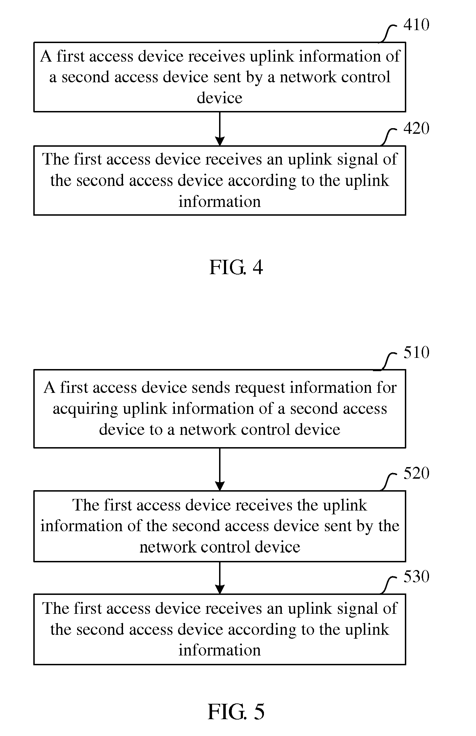

FIG. 4 is a flowchart of a wireless communication method according to Embodiment 4 of the present invention. As shown in the figure, this embodiment of the present invention specifically includes the following content.

410. A first access device receives uplink information of a second access device sent by a network control device, where the first access device and the second access device are inter-frequency devices or inter-system devices, and the uplink information includes frequency information of an uplink of the second access device or includes frequency information of an uplink of the second access device and bandwidth information of the second access device; in addition, the network control device is responsible for managing coordinated work between the first access device and the second access device.

Specifically, the network control device is mainly responsible for managing coordinated cooperation between the first access device and the second access device in a centralized manner, for example, load balancing and mobility. The network control device can manage coordinated cooperation between devices within a 3GPP network and a non-3GPP network, for example, coordinated cooperation between devices within an LTE network and a WLAN network. In addition, the uplink information of the second access device sent by the network control device may be uplink information of the second access device previously acquired and stored by the network control device, or may be uplink information of the second access device actively sent by the second access device, or may be uplink information of the second access device sent by the second access device after the network control device sends a request message for acquiring the uplink information of the second access device to the second access device.

420. The first access device receives an uplink signal of the second access device according to the uplink information.

Therefore, according to the wireless communication method provided by this embodiment of the present invention, uplink information of a second access device sent by a network control device is received, and an uplink signal of the second access device is received according to the uplink information of the second access device, so as to achieve an objective that a first access device receives a signal sent by user equipment of the inter-system second access device or a first access device receives a signal sent by user equipment of the inter-frequency second access device, and that the first access device identifies whether the user equipment falls within a coverage area of the first access device or is near to the first access device, thereby enhancing cooperation between different access devices.

FIG. 5 is a flowchart of a wireless communication method according to Embodiment 5 of the present invention. As shown in the figure, this embodiment of the present invention specifically includes the following content.

510. A first access device sends request information for acquiring uplink information of a second access device to a network control device, so that the network control device acquires the uplink information of the second access device from the second access device, where the first access device and the second access device are inter-frequency devices or inter-system devices, and the uplink information includes frequency information of an uplink of the second access device or includes frequency information of an uplink of the second access device and bandwidth information of the second access device; in addition, the network control device is responsible for managing coordinated work between the first access device and the second access device.

Specifically, the first access device sends the request information for acquiring the uplink information of the second access device to the network control device. After receiving the request information, the network control device acquires the uplink information of the second access device from the second access device. The uplink information of the second access device acquired by the network control device from the second access device may be uplink information of the second access device previously acquired and stored by the network control device, or may be uplink information of the second access device actively sent by the second access device, or may be uplink information of the second access device sent by the second access device after the network control device sends a request message for acquiring the uplink information of the second access device to the second access device.

520. The first access device receives the uplink information of the second access device sent by the network control device.

530. The first access device receives an uplink signal of the second access device according to the uplink information.

Therefore, according to the wireless communication method provided by this embodiment of the present invention, request information for acquiring uplink information of a second access device is sent to a network control device, then the uplink information of the second access device sent by the network control device is received, and an uplink signal of the second access device is received according to the uplink information of the second access device, so as to achieve an objective that a first access device receives a signal sent by user equipment of the inter-system second access device or a first access device receives a signal sent by user equipment of the inter-frequency second access device, and that the first access device identifies whether the user equipment falls within a coverage area of the first access device or is near to the first access device, thereby enhancing cooperation between different access devices.

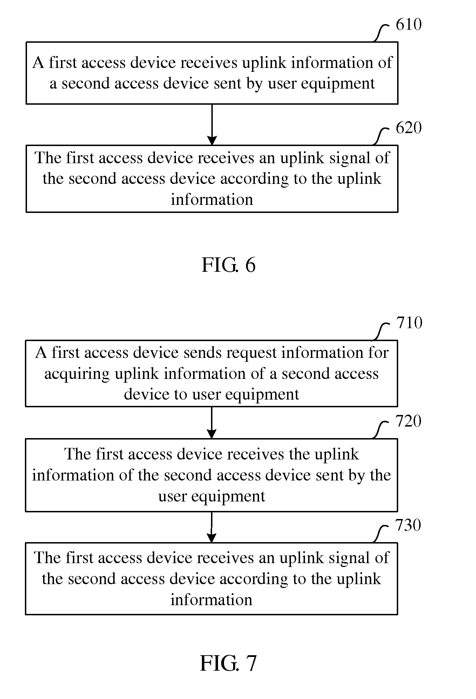

FIG. 6 is a flowchart of a wireless communication method according to Embodiment 6 of the present invention. As shown in the figure, this embodiment of the present invention specifically includes the following content.

610. A first access device receives uplink information of a second access device sent by user equipment, where the first access device and the second access device are inter-frequency devices, and the uplink information includes frequency information of an uplink of the second access device or includes frequency information of an uplink of the second access device and bandwidth information of the second access device; in addition, the user equipment is user equipment served by the first access device, where the user equipment is user equipment that can operate at different frequencies or in different systems; in case of a different frequency, the first access device may allocate idle time of the user equipment for measurement, to acquire the uplink information of the second access device; in case of a different system, provided that the user equipment turns on a receiver of the different system, broadcast information of the second access device can be received, and the uplink information of the second access device can be acquired.

Specifically, if the user equipment previously acquired and stored the uplink information of the second access device, when connected to the first access device, the user equipment can directly send the uplink information of the second access device to the first access device.

620. The first access device receives an uplink signal of the second access device according to the uplink information.

Therefore, according to the wireless communication method provided by this embodiment of the present invention, a first access device receives uplink information of a second access device sent by user equipment, and receives an uplink signal of the second access device according to the uplink information of the second access device, so as to achieve an objective that the first access device receives a signal sent by user equipment of the inter-system second access device or the first access device receives a signal sent by user equipment of the inter-frequency second access device, and that the first access device identifies whether the user equipment falls within a coverage area of the first access device or is near to the first access device, thereby enhancing cooperation between different access devices.

FIG. 7 is a flowchart of a wireless communication method according to Embodiment 7 of the present invention. As shown in the figure, this embodiment of the present invention specifically includes the following content.

710. A first access device sends request information for acquiring uplink information of a second access device to user equipment, where the uplink information is uplink information of the second access device previously acquired and stored by the user equipment, or uplink information of the second access device actively acquired by the user equipment after the user equipment receives the request information that is for acquiring the uplink information of the second access device and is sent by the first access device; the first access device and the second access device are inter-frequency devices or inter-system devices, and the uplink information includes frequency information of an uplink of the second access device or includes frequency information of an uplink of the second access device and bandwidth information of the second access device.

720. The first access device receives the uplink information of the second access device sent by the user equipment.

730. The first access device receives an uplink signal of the second access device according to the uplink information.

Therefore, according to the wireless communication method provided by this embodiment of the present invention, a first access device sends request information for acquiring uplink information of a second access device to user equipment, then receives the uplink information of the second access device sent by the user equipment, and receives an uplink signal of the second access device according to the uplink information of the second access device, so as to achieve an objective that the first access device receives a signal sent by user equipment of the inter-system second access device or the first access device receives a signal sent by user equipment of the inter-frequency second access device, and that the first access device identifies whether the user equipment falls within a coverage area of the first access device or is near to the first access device, thereby enhancing cooperation between different access devices.

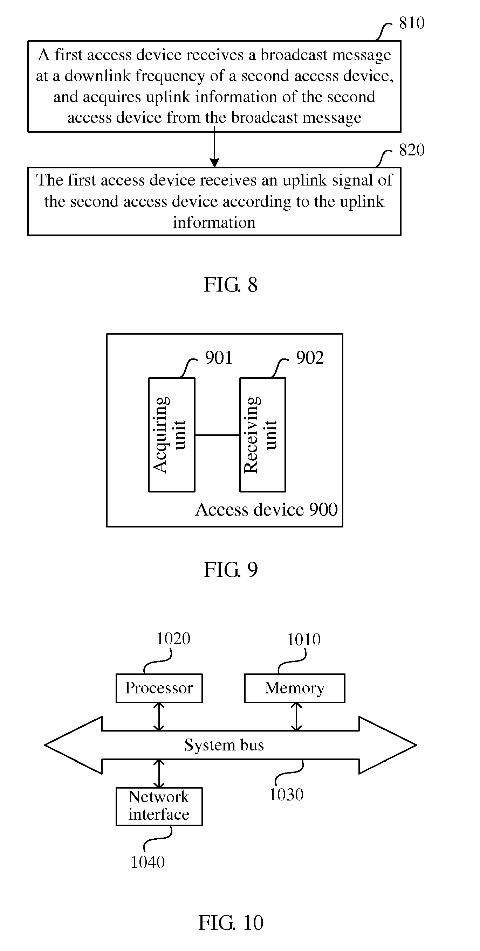

FIG. 8 is a flowchart of a wireless communication method according to Embodiment 8 of the present invention. As shown in the figure, this embodiment of the present invention specifically includes the following content.

810. A first access device receives a broadcast message at a downlink frequency of a second access device, and acquires uplink information of the second access device from the broadcast message.

Specifically, the first access device may adjust a receiver that is of the first access device and is of a same standard as the second access device to a downlink frequency at which the second access device may operate, receive the broadcast message on a downlink bandwidth, and acquire the uplink information of the second access device from the broadcast message. The first access device and the second access device are inter-frequency devices or inter-system devices, and the uplink information includes frequency information of an uplink of the second access device or includes frequency information of an uplink of the second access device and bandwidth information of the second access device.

820. The first access device receives an uplink signal of the second access device according to the uplink information.

Therefore, according to the wireless communication method provided by this embodiment of the present invention, a first access device searches for a downlink frequency of a second access device and performs listening, receives a broadcast message at the downlink frequency of the second access device, acquires uplink information of the second access device from the broadcast message, and receives an uplink signal of the second access device according to the uplink information of the second access device, so as to achieve an objective that the first access device receives a signal sent by user equipment of the inter-system or inter-frequency second access device, and that the first access device identifies whether the user equipment falls within a coverage area of the first access device or is near to the first access device, thereby enhancing cooperation between different access devices.

FIG. 9 is a schematic diagram of an access device 900 according to Embodiment 9 of the present invention. The device is configured to execute the wireless communication methods provided by Embodiments 1 to 8 of the present invention. The access device 900 provided by this embodiment may be the first access device according to Embodiments 1 to 8. As shown in the figure, the access device 900 provided by this embodiment of the present invention specifically includes: an acquiring unit 901 and a receiving unit 902. The acquiring unit 901 is configured to acquire uplink information of a second access device, where the uplink information includes frequency information of an uplink of the second access device; the receiving unit 902 is configured to receive an uplink signal of the second access device according to the uplink information. The access device 900 and the second access device are inter-frequency devices or inter-system devices.

Optionally, the uplink information may further include bandwidth information of the second access device.

As an optional embodiment, the acquiring unit 901 is specifically configured to receive the uplink information of the second access device sent by the second access device. Optionally, the access device 900 may further include: a first sending unit, configured to send request information for acquiring the uplink information to the second access device.

As another optional embodiment, the acquiring unit 901 is specifically configured to receive the uplink information of the second access device sent by a network control device, where the network control device is responsible for managing coordinated work between the access device and the second access device. Optionally, the access device 900 may further include: a second sending unit, configured to send request information for acquiring the uplink information of the second access device to the network control device.

As still another optional embodiment, the acquiring unit 901 is specifically configured to receive the uplink information of the second access device sent by user equipment, where the user equipment is user equipment served by the access device 900. In addition, the access device 900 may further include: a third sending unit, configured to send request information for acquiring the uplink information of the second access device to the user equipment.

The uplink information is uplink information of the second access device previously acquired and stored by the user equipment, or uplink information of the second access device actively acquired by the user equipment after the user equipment receives the request information that is for acquiring the uplink information of the second access device and is sent by the access device 900.

As yet another optional embodiment, the acquiring unit 901 is specifically configured to receive a broadcast message at a downlink frequency of the second access device and acquire the uplink information of the second access device from the broadcast message.

FIG. 10 is a schematic diagram of an access device 1000 according to Embodiment 9 of the present invention. As shown in the figure, the access device 1000 provided by this embodiment of the present invention specifically includes: a memory 1010, a processor 1020, a system bus 1030, and a network interface 1040, where the memory 1010, the processor 1020, and the network interface 1040 can communicate with each other by using the system bus 1030.

The access device 1000 provided by this embodiment may be the first access device according to Embodiments 1 to 8. The access device 1000 provided by this embodiment is configured to execute any one of the wireless communication methods provided by Embodiments 1 to 8 of the present invention. Steps of the wireless communication methods provided by Embodiments 1 to 8 may be stored in the memory 1010 in a form of program code, and the program code is executed by using the processor 1020. The network interface 1040 is used by the access device 1000 to communicate with another device, for example, to communicate with the second access device or the user equipment in Embodiments 1 to 8.

Therefore, the access device 900 and the access device 1000 provided by the embodiments of the present invention acquire uplink information of a second access device in a manner such as receiving the uplink information of the second access device, receiving the uplink information of the second access device sent by a network control device, receiving the uplink information of the second access device sent by user equipment, or receiving a broadcast message at a downlink frequency of the second access device and acquiring the uplink information of the second access device from the broadcast information, and receive an uplink signal of the second access device according to the uplink information of the second access device, so as to achieve an objective that the access device 900 receives a signal sent by user equipment of the inter-system or inter-frequency second access device, and that the access device 900 identifies whether the user equipment falls within a coverage area of the access device 900 or is near to the access device 900, thereby enhancing cooperation between different access devices.

An embodiment of the present invention further provides a wireless communications system, where the system includes a first access device and a second access device, and the first access device may be the access device 900 provided by Embodiment 9 or the access device 1000 provided by Embodiment 10.

Therefore, according to the wireless communications system provided by this embodiment of the present invention, a first access device acquires uplink information of a second access device in a manner such as receiving the uplink information of the second access device, receiving the uplink information of the second access device sent by a network control device, receiving the uplink information of the second access device sent by user equipment, or receiving a broadcast message at a downlink frequency of the second access device and acquiring the uplink information of the second access device from the broadcast information, and receives an uplink signal of the second access device according to the uplink information of the second access device, so as to achieve an objective that the first access device receives a signal sent by user equipment of the inter-system or inter-frequency second access device, and that the first access device identifies whether the user equipment falls within a coverage area of the first access device or is near to the first access device, thereby enhancing cooperation between different access devices.

A person in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention. Any modification, equivalent replacement, or improvement made without departing from the spirit and principle of the present invention should fall within the protection scope of the present invention.

## Claims

1. A wireless communication method, wherein the method comprises:
acquiring, by a first access device, uplink information of a second access device, wherein the first access device and the second access device are inter-frequency devices or inter-system devices, and the uplink information comprises frequency information of an uplink of the second access device; and
receiving, by the first access device, an uplink signal of the second access device according to the uplink information.

2. The wireless communication method according to claim 1, wherein the uplink information further comprises bandwidth information of the second access device.

3. The wireless communication method according to claim 1 or 2, wherein the acquiring, by a first access device, uplink information of a second access device comprises:
receiving, by the first access device, the uplink information of the second access device sent by the second access device.

4. The wireless communication method according to claim 3, before the receiving, by the first access device, the uplink information of the second access device sent by the second access device, further comprising:
sending, by the first access device, request information for acquiring the uplink information to the second access device.

5. The wireless communication method according to claim 1 or 2, wherein the acquiring, by a first access device, uplink information of a second access device comprises:
receiving, by the first access device, the uplink information of the second access device sent by a network control device, wherein the network control device is responsible for managing coordinated work between the first access device and the second access device.

6. The wireless communication method according to claim 5, before the receiving, by the first access device, the uplink information of the second access device sent by a network control device, further comprising:
sending, by the first access device, request information for acquiring the uplink information of the second access device to the network control device.

7. The wireless communication method according to claim 1 or 2, wherein the acquiring, by a first access device, uplink information of a second access device comprises:
receiving, by the first access device, the uplink information of the second access device sent by user equipment, wherein the user equipment is user equipment served by the first access device.

8. The wireless communication method according to claim 7, before the receiving, by the first access device, the uplink information sent by user equipment, further comprising:
sending, by the first access device, request information for acquiring the uplink information of the second access device to the user equipment.

9. The wireless communication method according to claim 7 or 8, wherein the uplink information is uplink information of the second access device previously acquired and stored by the user equipment, or uplink information of the second access device acquired by the user equipment after the user equipment receives the request information that is for acquiring the uplink information of the second access device and is sent by the first access device.

10. The wireless communication method according to claim 1 or 2, wherein the acquiring, by a first access device, uplink information of a second access device comprises:
receiving, by the first access device, a broadcast message at a downlink frequency of the second access device, and acquiring the uplink information of the second access device from the broadcast message.

11. An access device, wherein the device comprises:
an acquiring unit, configured to acquire uplink information of the second access device, wherein the access device and the second access device are inter-frequency devices or inter-system devices, and the uplink information comprises frequency information of an uplink of the second access device; and
a receiving unit, configured to receive an uplink signal of the second access device according to the uplink information.

12. The access device according to claim 11, wherein the uplink information further comprises bandwidth information of the second access device.

13. The access device according to claim 11 or 12, wherein the acquiring unit is specifically configured to receive the uplink information of the second access device sent by the second access device.

14. The access device according to claim 13, wherein the device further comprises:
a first sending unit, configured to send request information for acquiring the uplink information to the second access device.

15. The access device according to claim 11 or 12, wherein the acquiring unit is specifically configured to receive the uplink information of the second access device sent by a network control device, wherein the network control device is responsible for managing coordinated work between the access device and the second access device.

16. The access device according to claim 15, wherein the device further comprises:
a second sending unit, configured to send request information for acquiring the uplink information of the second access device to the network control device.

17. The access device according to claim 11 or 12, wherein the acquiring unit is specifically configured to receive the uplink information of the second access device sent by user equipment, wherein the user equipment is user equipment served by the access device.

18. The access device according to claim 17, wherein the device further comprises:
a third sending unit, configured to send request information for acquiring the uplink information of the second access device to the user equipment.

19. The access device according to claim 17 or 18, wherein the uplink information is uplink information of the second access device previously acquired and stored by the user equipment, or uplink information of the second access device acquired by the user equipment after the user equipment receives the request information that is for acquiring the uplink information of the second access device and is sent by the access device.

20. The access device according to claim 11 or 12, wherein the acquiring unit is specifically configured to receive a broadcast message at a downlink frequency of the second access device and acquire the uplink information of the second access device from the broadcast message.

21. A wireless communications system, wherein the system comprises: a first access device and a second access device, the first access device is the access device according to any one of claims 11 to 20, and the first access device and the second access device are inter-frequency devices or inter-system devices.
